# EUROPEAN PATENT SPECIFICATION

(11) **EP 3 395 161 B1**
(45) Date of publication and mention of the grant of the patent: **18.03.2020**
(21) Application number: 18176522.3
(22) Date of filing: 10.12.2013
(51) Int. Cl.: A01G 3/025

(54) **PRUNING TOOL**
ASTSCHERE
OUTIL DE TAILLE

(30) Priority: 08.11.2013 WO PCT/EP2013/073403
(43) Date of publication of application: 31.10.2018
(62) Divisional of application: 13802380.9
(73) Proprietor: HUSQVARNA AB, 561 82 Huskvarna (SE)
(72) Inventor: Kohl, Peter, 89257 Illertissen (DE); Brobeil, Achim, 89160 Dornstadt (DE); Missel, Patrick, 89198 Westerstetten (DE)
(74) Representative: Finkele, Rolf

(56) References cited:
- DE-A1- 3 330 093
- US-A1- 2007 119 057
- US-A1- 2012 167 397

## Description

### TECHNICAL FIELD

The present invention relates to a pruning tool, and more particularly relates to a handle, an adjustment arrangement for a cutting assembly, and a pulling member of the pruning tool. Such a pruning tool is known from US 2012/167397 A1.

### BACKGROUND

Tool, such as a branch pruner, a lopper, secateurs, with a telescopic pole, are well known in the art. These tools typically includes a cutting assembly with at least one movable component in the cutting assembly, the telescopic pole attached to the cutting assembly, and a drive cable having a first end attached to the cutting assembly and a second end attached to a pulling member. The pulling member is configured to transmit a pulling force to the cutting assembly. Such tools may be used to cut the branches in an open area where the space is not a constraint.

However, the above mentioned tools with a pole, such as the telescopic pole, may be uncomfortable for a user to use in a narrow space and can not be operated without the pole due to lack of handling. Further, these tools do not have an adjustment arrangement to adjust a width of a cutting jaw of the cutting assembly. Thus, these tools have a constant width of the cutting jaw irrespective of smaller or larger branches during cutting operation. Furthermore, these tools do not have a storage arrangement for the pulling member and thus, the pulling member may be hanging free at one end which may be cumbersome during storage, transportation and also during the cutting operation.

Therefore, in light of the foregoing, there is a need for an improved tool.

### SUMMARY

In view of the above, it is an objective of the present invention to solve or at least reduce the problems discussed above. The objective is at least partially achieved with a pruning tool according to appended independent claim1. The pruning tool includes a cutting assembly with a blade arrangement including at least one movable component, and a drive cable attached to the at least one movable component at a first end of the drive cable, wherein the drive cable is configured to actuate the at least one movable component. The pruning tool further includes an intermediate portion coupled to the cutting assembly, and a handle provided adjacent to the intermediate portion. The handle is configured to be grasped by a user during operation of the pruning tool. The handle has a length in a range of about 10 cm to 30 cm. A channel is formed in the handle, wherein a second end of the drive cable is received through the channel.

According to an embodiment, the length of the handle of the pruning tool is about 15 cm.

According to an embodiment, the intermediate portion is integral with the handle.

According to an embodiment, the cutting assembly includes a stationary blade and the at least one movable component. The at least one movable component is a movable blade. The movable blade is pivotally connected to the stationary blade with the intermediate portion formed on the stationary blade.

According to an embodiment, the stationary blade and the movable blade form a cutting jaw positioned offset with respect to a longitudinal axis of the handle.

A length of the handle is short in length which may facilitate cutting of the branches in narrow spaces where the pruning tool with a telescopic pole will find it difficult to perform the cutting action. The channel may provide support and protection to the drive cable, and at the same time allow the drive cable to be connected to the movable blade. The drive cable may not get displaced and get tangled on the branches, as the drive cable is bypassed through the channel. The channel also provides for an improved ergonomic design, wherein the drive cable enters the tool proximate to the holding hand of the user during operation. Preferably a trumpet-like shape of a second opening of the channel may allow the second end of the drive cable to be pulled in different directions.

According to an embodiment, a pruning tool includes an adjustment arrangement configured to adjust a maximum width of the cutting jaw.

According to an embodiment, the adjustment arrangement includes a cam member configured to limit a pivoting motion of the movable blade. According to a further embodiment, the adjustment arrangement includes an arrestor configured to limit a pivoting motion of the movable blade. The adjustment arrangement of the cutting jaw may optimize the range of pulling the drive cable. When small branches are to be cut, the adjustment arrangement may restrict the range of the cutting jaw and thus the movable blade has to be moved for cutting over a shorter distance which results in a reduced range the drive cable has to be pulled. Thus, ergonomics of the pruning tool may improve.

According to an embodiment, the pruning tool further includes a pulling member attached to the second end of the drive cable.

According to an embodiment, a pruning tool having a first connecting portion formed adjacent to the intermediate portion. The pulling member includes a second connecting portion configured to be removably coupled to the first connecting portion.

According to an embodiment, the first connecting portion of the handle includes a cavity and the second connecting portion of the pulling member is an elongate portion. The cavity of the handle is configured to at least partly and removably receive the elongate portion of the pulling member.

According to an embodiment, the pruning tool further includes a pole attached to the handle.

The pruning tool provides an arrangement for storage of the pulling member when the pruning tool is used without a pole. The pruning tool also provides the arrangement for storage of the pulling member with the pole by slidably mounting the pulling member on the pole.

According to an embodiment, the handle includes a grasping portion configured to be grasped by a user. A wide portion is adjacent to the cutting assembly. Further, a width of the wide portion is larger than a width of the grasping portion.

According to an embodiment, the pulling member includes a gripping portion having a T-shape. According to a further embodiment, the pulling member includes a gripping portion having a D-shape.

According to an embodiment, the pulling member further includes a drive cable coiling arrangement. According to the invention, the pulling member includes a drive cable uncoiling arrangement.

According to an aspect of the present invention, a stationary blade in the cutting assembly may be designed to guide the branches towards cutting edges. The stationary blade may be curved at a distal end to avoid a hand of a user to slide towards the cutting edges. Due to a offset distance, a distance between the pivot point and the connect point also increases. Thus, a moment of a pulling force on the movable blade may increase. The width of a wide portion of a first end of the handle being larger helps the user to avoid slipping of the hand towards the cutting assembly. This configuration thus may improve ergonomics of the tool and avoids any injury to the user. The D-shaped or T-shaped pulling member may provide improved gripping while avoiding the slide which will increase the pulling force applied to cut the branches. The drive cable coiling arrangement may ensure the windings of the extra drive cable and avoid tangling during the operation. The drive cable uncoiling arrangement may ensure for the smooth removal of the drive cable from the drive cable coiling arrangement. Thus, ergonomics of the pruning tool may improve.

### BRIEF DESCRIPTION OF THE DRAWINGS

The invention will be described in more detail with reference to the enclosed drawings, wherein:
FIG. **1A** illustrates a side view of a pruning tool, according to an embodiment of the present invention;
FIG. **1B** illustrates an exploded view of the pruning tool of FIG. **1A****;**
FIG. **2** illustrates a perspective view of the pruning tool with a pole, according to another embodiment of the present invention;
FIG. **3A** illustrates a perspective view of the pruning tool with a pulling member in an uncoupled configuration without the pole, according to yet another embodiment of the present invention;
FIG. **3B** illustrates a side view of the pruning tool with the pulling member of FIG. **3A** in a coupled configuration;
FIGS. **4A** and **4B** illustrate exemplary views of a D-shaped pulling member, according to an embodiment of the present invention.
FIG. **5** illustrates a perspective view of a T-shaped pulling member, according to another embodiment of the present invention.
FIGS. **6A** and **6B** illustrate a front side view and a rear side view of the pruning tool with an adjustment arrangement in a configuration which exemplifies a first maximum width of the cutting jaw, according to yet another embodiment of the present invention;
FIGS. **7A** and **7B** illustrate a front side view and a rear side view of the pruning tool with the adjustment arrangement of FIGS. **6A** and **6B** in a configuration which exemplifies a second maximum width of the cutting jaw; and
FIGS. **8A** and **8B** illustrate side views of the pruning tool with the adjustment arrangement exemplifying various maximum widths of the cutting jaw, according to another embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

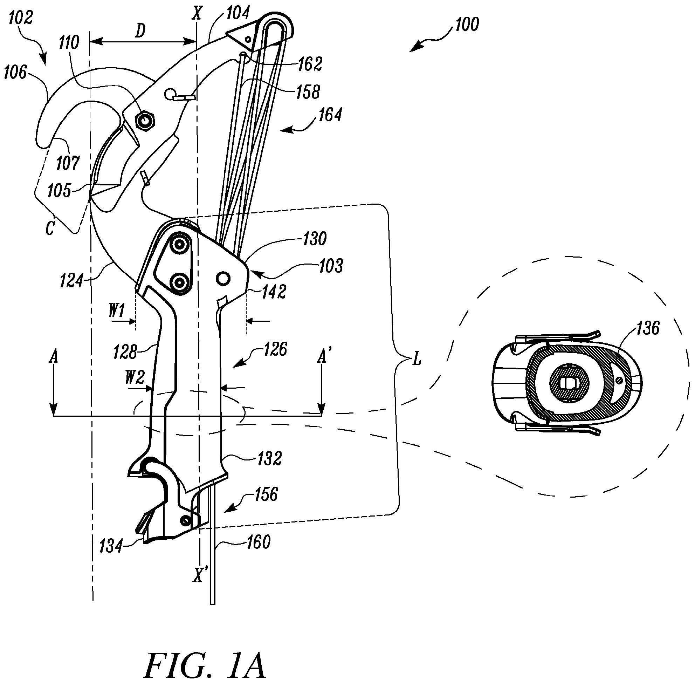

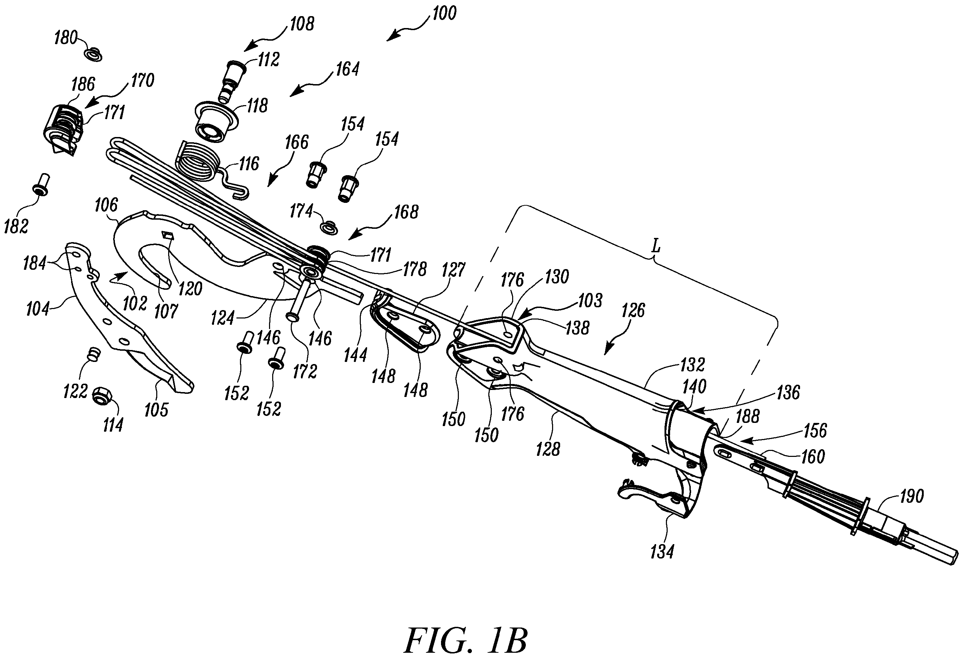

FIGS. **1A** and **1B** illustrate a side view and an exploded view of a pruning tool **100** respectively, according to an embodiment of the present invention. The pruning tool **100,** as illustrated in FIGS. **1A** and **1B****,** is a pruning lopper. In various other embodiments, the pruning tool **100** may be a pruning shear, secateurs, etc. The pruning tool **100** may be used for pruning the branches or twigs of a tree.

The pruning tool **100** includes a cutting assembly **102** having at least one movable component. As illustrated, the cutting assembly **102** includes a blade arrangement with the at least one movable component, embodied as a movable blade **104,** pivotally connected to a stationary blade **106** by a pivoting arrangement **108.** The movable blade **104** may perform a pivotal movement with respect to the stationary blade **106** about a pivot point **110** during a cutting action. As illustrated in FIG. **1B****,** the pivoting arrangement **108** includes a pivot pin **112,** a nut **114,** a spring **116,** and a spring holder **118.** During assembly, the pivot pin **112** passes through the spring holder **118** and respective openings **120** provided on the stationary blade **106** and the movable blade **104.** Further, the nut **114** is tightened on the pivot pin **112** to form the pivoting arrangement **108.** In the pivoting arrangement **108,** the spring **116** is disposed over the spring holder **118** and is in contact with the stationary blade **106** and the movable blade **104.** The movable blade **104** may be biased towards an open position by the spring **116** and an insert **122.** The spring **116** is embodied as a recoil spring. However, the spring **116** may be any other type of resilient member known in the art, for example, a coil spring, a volute spring, rubber members, or the like. Alternatively, the movable blade **104** may be connected to the stationary blade **106** in such a way, so as to perform a linear movement with respect to the stationary blade **106** during the cutting action.

The stationary blade **106** and the movable blade **104** may include cutting edges **107** and **105,** respectively. The cutting edges **105** and **107** may be sharpened and/or be serrated in order to cut the branches. The cutting edges **105** and **107** forms a cutting jaw **C.** The cutting jaw **C** may include an area formed between the cutting edges **107, 105** of the stationary blade **106** and the movable blade **104,** respectively. Further, the stationary blade **106** may be designed to guide the branches towards the cutting edges **105, 107.** Moreover, the stationary blade **106** may be curved at a distal end **124.** The curved design of the stationary blade **106** may avoid a hand of a user to slide towards the cutting edges **105** and **107.** In various other embodiments, the movable blade **104** may include two or more movable blades. The various details of the cutting assembly **102,** as illustrated in the FIGS. **1A** and **1B****,** are purely exemplary in nature, and the cutting assembly **102** may be of any other design within the scope of the present invention.

Further, the pruning tool **100** may include an intermediate portion **103** coupled to the cutting assembly **102.** The intermediate portion **103** may be coupled to the distal end **124** of the stationary blade **106.** In an embodiment, the intermediate portion **103** may be formed on the stationary blade **106.** According to an embodiment of the present invention, a handle **126** may be provided adjacent to the intermediate portion **103.** The handle **126** includes a grasping portion **128** configured to be grasped by a user during operation of the pruning tool **100.** In an embodiment, the handle **126** may be integral with the intermediate portion **103** and extends between the first end **130** and a second end **132** and has a length **L.** In various other embodiments, the intermediate portion **103** may be separately formed from the handle **126** and coupled to the handle **126** by fasteners, a snap-fit mechanism, adhesives, a male female connector mechanism, or the like.

In an embodiment, the length **L** of the handle **126** may be in a range of about 10 cm to 30 cm. In another embodiment, the length **L** of the handle **126** is about 15 cm. Further, the handle **126** may include a channel **136** (illustrated in a sectional view of FIG. **1A** about **AA'**), the channel **136** having a first opening **138** close to the first end **130** and a second opening **140** close to the second end **132.** In an embodiment, the second opening **140** of the channel **136** may have a trumpet-like shape.

According to an embodiment, the handle **126** may include a wide portion **142** adjacent to the cutting assembly **102.** A width **W1** of the wide portion **142** is larger than a width **W2** of the grasping portion **128.** The width **W1** of the wide portion **142** being larger helps the user to avoid slipping of the hand towards the cutting assembly **102.** This configuration thus may avoid any injury to the user.

As illustrated in FIG. **1B****,** the handle **126** includes a cap **127** removably connected at a first end **130** of the handle **126** adjacent to the intermediate portion **103.** The cap **127** may be connected to the handle **126** by a snap-fit mechanism, or fasteners, or adhesives, or the like. In other embodiments, the cap **127** may be integral with the handle **126.** The cap **127** includes a recessed portion **144** configured to receive the distal end **124** of the stationary blade **106.** The cap **127,** the distal end **124** of the stationary blade **106,** and the first end **130** of the handle **126** include a set of aligned openings **146, 148,** and **150,** respectively. The distal end **124** of the stationary blade **106** is received in the recessed portion **144** such that the openings **146** of the stationary blade **106** are in alignment with the openings **148** of the cap **127** and the openings **150** provided at the first end **130** of the handle **126.** Pins **152** may pass through the aligned openings **146, 148,** and **150** and retained by respective holding pins **154** to fixedly fasten the stationary blade **106** to the handle **126.**

According to an embodiment of the present invention, the cutting jaw **C** may be positioned offset with respect to a longitudinal axis **XX'** of the handle **126** by an offset distance **D.** The offset distance **D** may be based on the shape and design of the stationary blade **106** and/or the intermediate portion **103.** In an embodiment, the offset distance **D** may be in a range of about 2 cm to 8 cm.

The pruning tool **100** further includes a drive cable **156** having a first end **158** and a second end **160.** The first end **158** of the drive cable **156** is attached to the movable blade **104** at a connect point **162.** The second end **160** of the drive cable **156** is received through the channel **136** provided in the handle **126.** Further, the trumpet-like shape of the second opening **140** of the channel **136** may allow the second end **160** of the drive cable **156** to be pulled in different directions. Alternatively, the second end **160** of the drive cable **156** may hang free beside the handle **126.**

The drive cable **156** may pass through a transmission system **164.** As illustrated in FIG. **1B****,** the transmission system **164** may be a pulley arrangement **166.** The pulley arrangement **166** includes a first pulley **168** and a second pulley **170.** The first pulley **168** is positioned proximate to the handle **126** and the second pulley **170** is positioned proximate to the connect point **162.** The first pulley **168** may be disposed at the first end **130** of the handle **126** and rotatably supported by a bolt **172** and a nut **174.** The bolt **172** may be received in openings **176** at the first end **130** of the handle **126** and a first pulley opening **178** to rotatably support the first pulley **168.** The second pulley **170** may be rotatably supported at the movable blade **104** by a bolt **180** and a nut **182.** The bolt **180** may be received in an opening **184** in the movable blade **104** and a second pulley opening **186** to rotatably support the second pulley **170.**

The first and second pulleys **168, 170** include multiple grooves **171.** The drive cable **156** is wound around the multiple grooves **171** forming multiple loops of the drive cable **156** between the first and second pulleys **168, 170.** However, in other embodiments, the transmission system **164** may include a lever arrangement, a gear arrangement, a chain drive, a pneumatic arrangement, a hydraulic arrangement, or a combination thereof.

The transmission system **164** may be used to multiply a pulling force applied by the user. The pulling force is applied at the connect point **162** on the movable blade **104** to perform cutting action. According to an embodiment, due to the offset distance **D,** a distance between the pivot point **110** and the connect point **162** also increases. Thus, a moment of the pulling force on the movable blade **104** may increase.

According to an aspect of the present invention, the length **L** of the handle **126** is short in length which may facilitate cutting of the branches in narrow spaces where the pruning tool **100** with a telescopic pole will find it difficult to perform the cutting action. The channel **136** may provide support and protection to the drive cable **156,** and at the same time allow the drive cable **156** to be connected to the movable blade **104.** The drive cable **156** may not get displaced and get tangled on the branches, as the drive cable **156** is bypassed through the channel **136.**

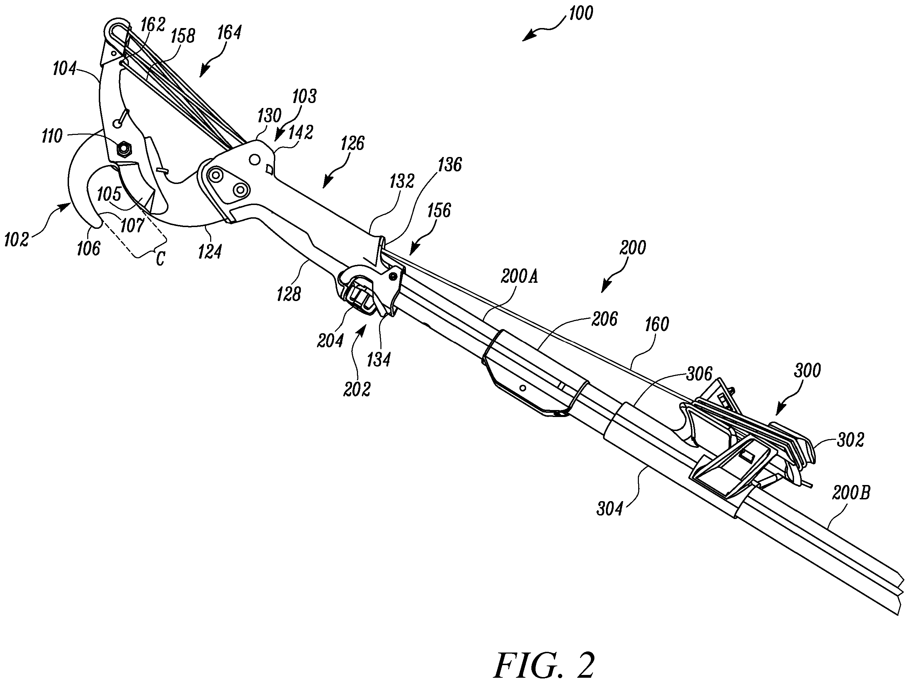

The handle **126** further includes a hollow part **188.** The hollow part **188** of the handle **126** includes a connecting portion **190.** The connecting portion **190** may be used to connect a pole **200** (illustrated in FIG. **2**) to the handle **126.**

FIG. **2** illustrates a perspective view of the pruning tool **100** with the pole **200,** according to another embodiment of the present invention. The handle **126** of the pruning tool **100** is detachably connected to the pole **200.** The second end **132** of the handle **126** and the pole **200** may be detachably connected to each other by a male and female coupler (not shown), and then locked relative to each other by a locking mechanism **202.** The locking mechanism **202** includes a knob **204** that may be connected to a screw (not shown). The knob **204** may be provided near one end of the pole **200.** The screw may be detachably coupled to a recess in the connecting portion **190** (shown in FIG. **1B**) of the handle **126.** A safety clasp **134** is further configured to prevent any inadvertent loosening of the knob **204** and/or unintentional detachment of the pole **200** from the handle **126.** Further, the pole **200** may be a telescopic pole and include a first tube **200A,** a second tube **200B,** and a coupler **206** that is configured to detachably connect the first tube **200A** to the second tube **200B.** In a locked configuration, the coupler **206** may telescopically lock the first tube and second tubes **200A, 200B** relative to each other. In an unlocked configuration, the coupler **206** may allow the first tube and second tubes **200A, 200B** to telescopically slide relative to each other. The first and second tubes **200A, 200B** are shown to be substantially cylindrical. However, the first and second tubes **200A, 200B** may be of any other cross-section, for example, elliptical, polygonal, or the like, within the scope of the present invention. The pole **200** may enable pruning of branches located at various heights from the ground.

Further, the pruning tool **100** includes a pulling member **300.** The pulling member **300** includes a gripping portion **302,** and an elongate portion **304.** The elongate portion **304** of the pulling member **300** is slidably mounted on the pole **200.** The pulling member **300** may include an auxiliary gripping **306** positioned on the elongate portion **304.** The auxiliary gripping **306** may facilitate gripping by the user and perform a pulling action via the pulling member **300.** The second end **160** of the drive cable **156** is connected to the pulling member **300.** The drive cable **156** may be coiled around the pulling member **300.** The pulling member **300** is configured to move the drive cable **156** in order to transmit the pulling force and actuate the movable blade **104.** In various other embodiments, the pulling member **300** may also be provided adjacent to the pole **200** without any sliding support on the pole **200.**

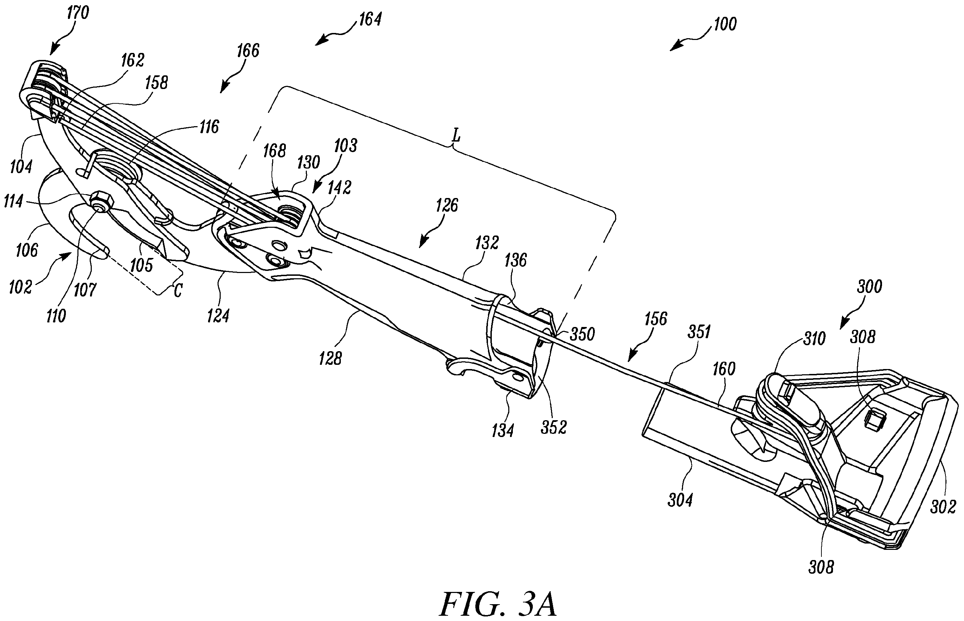

FIG. **3A** illustrates a perspective view of the pruning tool **100** with the pulling member **300** in an uncoupled configuration without the pole **200,** according to yet another embodiment of the present invention. The pulling member **300** includes at least one fixation clip **308.** The at least one fixation clip **308** may fix the second end **160** of the drive cable **156** on the pulling member **300.** The second end **132** of the handle **126** includes a first connecting portion **350.** The elongate portion **304** of the pulling member **300** includes a second connecting portion **351.** The first connecting portion **350** of the handle **126** is configured to removably couple with the second connecting portion **351** of the pulling member **300.** In an embodiment, the first connecting portion **350** includes a cavity **352** such that a diameter of the cavity **352** is larger than the diameter of the second connecting portion **351.** The cavity **352** of the first connecting portion **350** is configured to at least partly and removably receive the second connecting portion **351** of the pulling member **300.** The cavity **352** may be configured for storage of the pulling member **300.** In an embodiment, the safety clasp **134** may be configured to hold the second connecting portion **351** with the cavity **352.** In another embodiment, the cavity **352** of the first connecting portion **350** may include a male connector. In yet another embodiment the first connecting portion **350** including a male connector may be formed on the intermediate portion **103.** The male connector may be configured to removably couple with the inner contour of the second connecting portion **351** of the elongate portion **304** which will act as a female connector. In yet another embodiment, the diameter of the second connecting portion **351** may be smaller than the diameter of the first connecting portion **350.** The inner contour of the first connecting portion **350** may be configured to removably couple with an outer contour of the second connecting portion **351.**

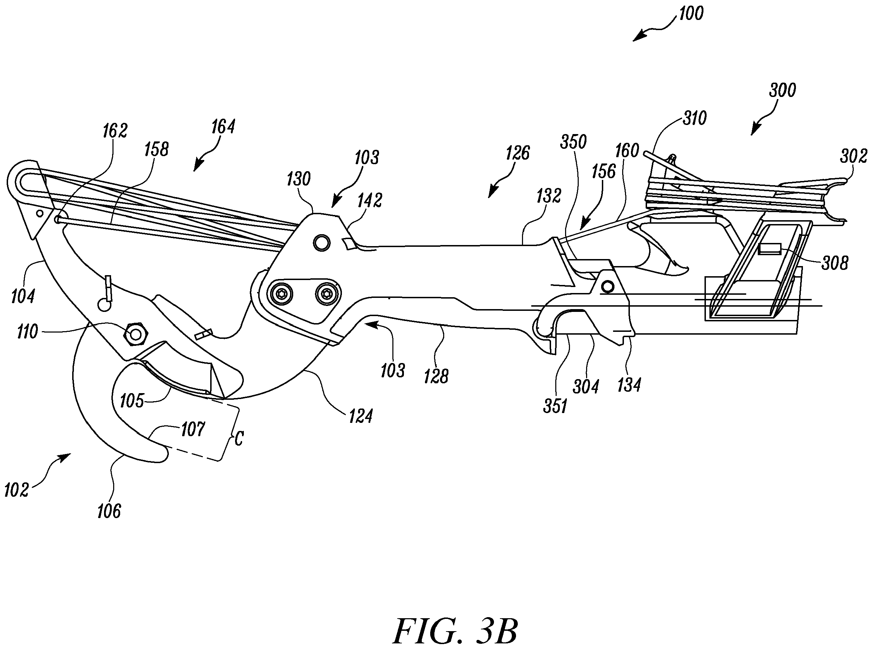

FIGS. **3B** illustrates a side view of the pruning tool **100** with the pulling member **300** of FIG. **3A** in a coupled configuration. The pulling member **300** is removably coupled with the handle **126.** The cavity **352** of the first connecting portion **350** of the handle **126** receives at least partly the second connecting portion **351** of the pulling member **300.** In an embodiment, the safety clasp **134** positioned at the first connecting portion **350** of the handle **126** may be configured to support the second connecting portion **351** of the pulling member **300.** Further, the safety clasp **134** may be in an open position when the outer contour of the second connecting portion **351** of the pulling member **300** is getting stored in the cavity **352** of the first connecting portion **350** of the handle **126.** The safety clasp **134** placed in the closed position and in contact with the second connecting portion **351,** when the outer contour of the second connecting portion **351** of the pulling member **300** is stored in the cavity **352** of the first connecting portion **350** of the handle **126.** The safety clasp **134** may frictionally lock the pulling member **300** with the handle **126** and facilitates the storage of the pulling member **300** within the handle **126.** In another embodiment, the locking of the pulling member **300** and the handle **126** may also be performed by a knob (not shown) positioned on the second connecting portion **351** of the pulling member **300.** The knob may be detachably coupled to a recess in the first connecting portion **350** of the handle **126.** In yet another embodiment, the pulling member **300** may have a clip-like element which may be configured to couple with the pole **200** or the handle **126.**

The pruning tool **100** provides an arrangement for storage of the pulling member **300** when the pruning tool **100** is used without a pole **200.** The pruning tool **100** also provides the arrangement for storage of the pulling member **300** with the pole **200** by slidably mounting the pulling member **300** on the pole **200.**

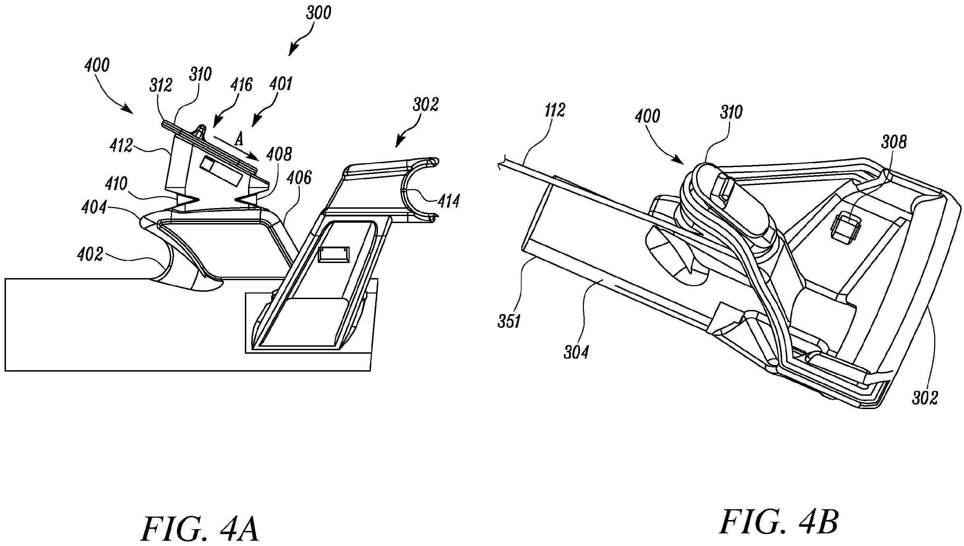

FIGS. **4A** and **4B** illustrate exemplary views of a D-shaped pulling member **300,** according to an embodiment of the present invention. The pulling member **300** includes the gripping portion **302** having a D-shaped structure. The D-shaped structure of the gripping portion **302** of the pulling member **300** may provide good gripping and increased pulling force to pull the drive cable **156** during the cutting operation. The pulling member **300** includes a coiling arrangement **400** for the drive cable **156** which may store extra drive cable **156** during the cutting operation. The coiling arrangement **400** may facilitate the coiling of the drive cable **156** on the pulling member **300** and includes a first curved portion **402,** a second curved portion **404,** and a third curved portion **406.** The first curved portion **402** may have a large radius which facilitates gripping of the pulling member **300** by the user while holding at the auxiliary gripping **306.** The second curved portion **404** may be configured to facilitate the coiling of the extra drive cable **156.** The third curved portion **406** may be configured to facilitate a first winding of the drive cable **156** around a first element **416** integral with the pulling member **300.** The first element **416** includes a first contact surface **408,** a second contact surface **410,** a third contact surface **412** and the uncoil element **310.** The gripping portion **302** includes a fourth contact surface **414.** The second end **160** of the drive cable **156** contacts the first contact surface **408** and then coils around the first element **416** to contact the second contact surface **410.** The at least one fixation clip **308** fixes the drive cable **156** which may facilitate the length of the rope to be fixed. Further, the coiling is performed about the first element **416** and the gripping portion **302.** The coiling of the drive cable **156** is performed between the third contact surface **412** and the fourth contact surface **414.** As illustrated in FIG. **4B** which shows the coiling of the drive cable **156** about the pulling member **300.** According to the invention, the pulling member **300** includes an uncoiling arrangement **401.** The uncoiling arrangement **401** includes an uncoil element **310** which is spring actuated. The uncoil element **310** with a protruding end **312** is configured to remove the coil of the drive cable **156** from the pulling member **300.** The uncoil element **310** in its closed position supports the drive cable **156** onto the first element **416** with the protruding end **312** of the uncoil element **310.** The uncoil element **310** is spring actuated and when the uncoil element **310** slides in a direction **A** by overcoming the spring force; the uncoiling of the drive cable **156** is performed.

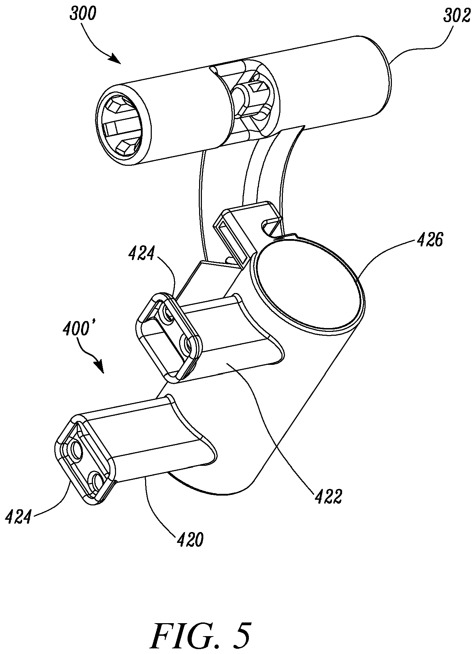

FIG. **5** illustrates a perspective view of a T-shaped pulling member **300,** according to another embodiment of the present invention. The pulling member **300** includes the gripping portion **302** having a T-shaped structure. The pulling member **300** with a T-shaped structure also includes a coiling arrangement **400'** for the drive cable **156.** The coiling arrangement **400'** may include a first coiling element **420** and a second coiling element **422.** The drive cable **156** is coiled around the first and second coiling elements **420, 422.** The first and second coiling elements **420, 422** have a protruding end **424** which may be configured to prevent the sliding of the drive cable **156.** An inner contour of the coupling portion **426** of the pulling member **300** may be slidably mounted on the pole **200.**

The various details of the coiling arrangement **400, 400'** and the uncoiling arrangement **401,** as illustrated in the FIGS. **4A, 4B****,** and **5****,** are purely exemplary in nature, and the coiling and uncoiling of the drive cable **156** about the pulling member **300** may be of any other design within the scope of the present invention. The D-shaped or T-shaped pulling member **300** may provide improved gripping while avoiding the slide which will increase the force applied to cut the branches. Thus, the ergonomics of the pruning tool **100** may improve. The coiling arrangement **400, 400'** may ensure the windings of the extra drive cable **156** and avoid tangling during cutting action.

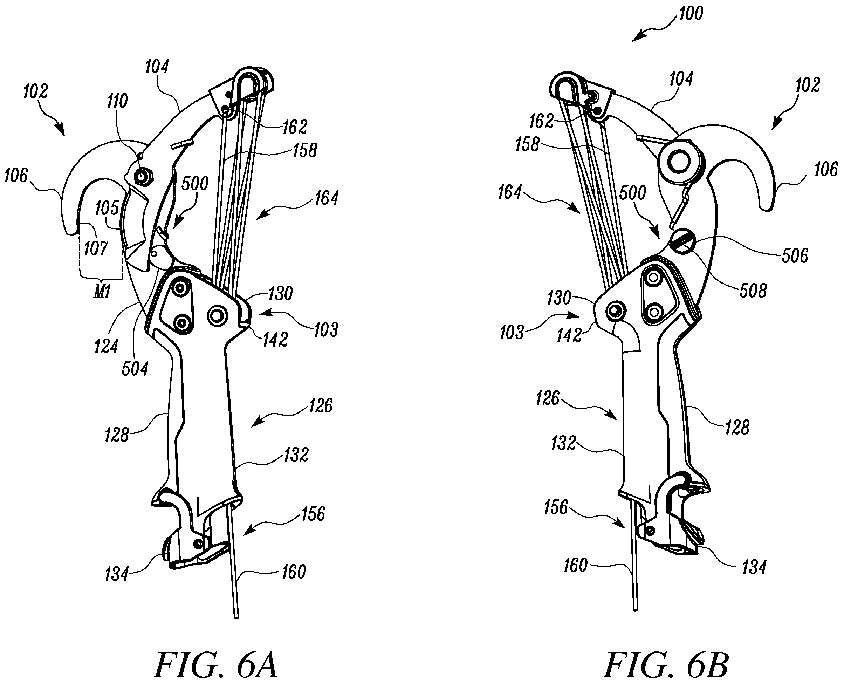

FIGS. **6A** and **6B** illustrate a front side view and a rear side view of the pruning tool **100,** respectively with an adjustment arrangement **500** in a configuration which exemplifies a first maximum width **M1** of the cutting jaw **C,** according to an embodiment of the present invention. As illustrated in FIG. **6A****,** the adjustment arrangement **500** includes a cam member **502** which may be configured to adjust the maximum width of the cutting jaw **C.** The cam member **502** may be positioned on the stationary blade **106.** As illustrated in the FIG. **6A****,** the cam member **502** is in a first position **504.** The first position **504** of the cam member **502** on the stationary blade **106** may provide the first maximum width **M1** of the cutting jaw **C.** The cam member **502** may be configured to limit a motion of the movable blade **104.** As illustrated in FIG. **6B****,** the adjustment arrangement **500** also includes a dial **506** which is rotatably connected to the cam member **502.** The dial **506** is positioned on the other side of the stationary blade **106** with respect to the cam member **502.** The dial **506** may include a protruding part **508** for a user to rotate the cam member **502.**

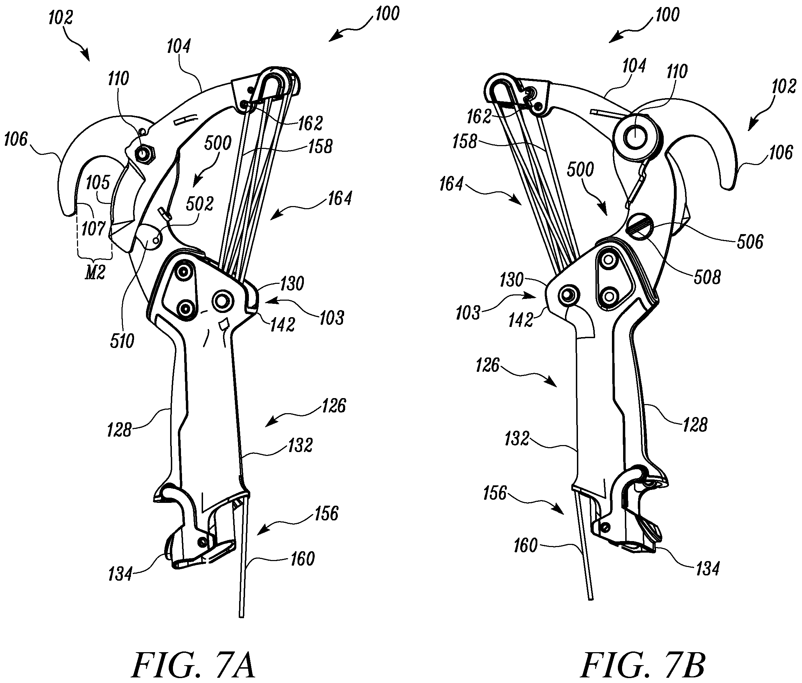

FIGS. **7A** and **7B** illustrate the front side view and the rear side view of the pruning tool **100,** respectively with the adjustment arrangement **500** of FIGS. 6A and 6B in a configuration which exemplifies a second maximum width **M2** of the cutting jaw **C.** As illustrated in FIGS. 6A and 6B, the cam member **502** is positioned in a second position **510** The second position **510** of the cam member **502** on the stationary blade **106** may provide the second maximum width **M2** of the cutting jaw **C.** In the second position **510,** the cam member **502** may be configured to limit a motion of the movable blade **104** providing the second maximum width **M2** of the cutting jaw **C.** The first position **504** and the second position **510** of the cam member **502** provides the first maximum width **M1** and second maximum width **M2** of the cutting jaw **C.** The length of the second maximum width **M2** is less than the length of the first maximum width **M1.** The maximum width of the cutting jaw **C** may vary between the first maximum width **M1** and the second maximum width **M2** based on the position of the cam member **502.** For example, the cam member **502** may be positioned in between the first position **504** and the second position **510** and the cutting jaw **C** can vary the width of the cutting jaw **C** according to the user requirements.

In various other embodiments, the adjustment arrangement **500** may be envisioned having a member performing linear motion instead of the cam member **502** to restrict the motion of the movable blade **104.** For example, the member may be positioned on the stationary blade **106** and performing linear motion to define the first maximum width **M1** and the second maximum width **M2** of the cutting jaw **C.**

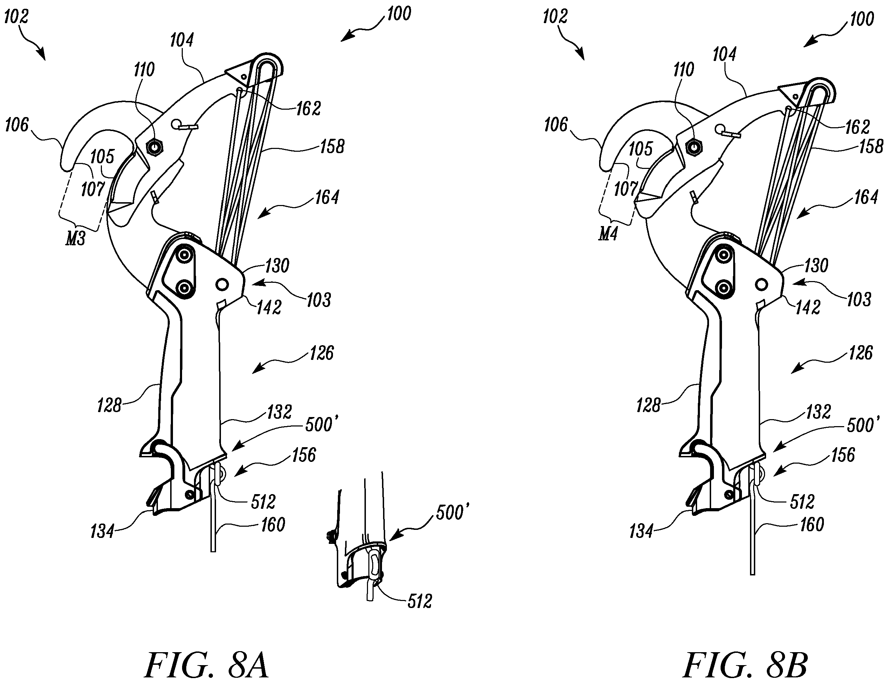

FIGS. **8A** and **8B** illustrate side views of the pruning tool **100** with the adjustment arrangement **500'** exemplifying various maximum widths of the cutting jaw, according to another embodiment of the present invention. The adjustment arrangement **500'** may include an arrestor **512** disposed on the drive cable **156** configured to restrict the maximum width of the cutting jaw **C.** The arrestor **512** is positioned on the drive cable **156** by the user to vary the maximum width of the cutting jaw **C.** The drive cable **156** is pulled and the arrestor **512** is slide towards the handle **126** to get in contact with the handle **126.** As illustrated in FIG. **8A****,** the drive cable **156** is pulled and the arrestor **512** is slide towards the handle **126** by the user, such that the area of the maximum width of the cutting jaw **C** is decreased which results in a third maximum width **M3** of the cutting jaw **C.** Further, as illustrated in FIG. **8B****,** the drive cable **156** is further pulled and the arrestor **512** is slide towards the handle **126** by the user, such that the area of the maximum width of the cutting jaw **C** is further decreased, which results in the fourth maximum width **M4** of the cutting jaw **C.** The third maximum width **M3** and the fourth maximum width **M4** of the cutting jaw **C** are exemplary in nature and the maximum width may vary in between the third maximum width **M3** and the fourth maximum width **M4** or in any of the position by sliding the arrestor **512** over the drive cable **156** in respective positions.

The various details of the adjustment arrangement **500, 500'** as shown in FIGS. **6A, 6B****,** **7A, 7B****,** **8A** and **8B****,** are purely exemplary in nature, and the adjustment arrangement **500** may be of any other design within the scope of the present invention. The adjustment arrangement **500, 500'** of the cutting jaw **C** may optimize the range of pulling the drive cable **156.** When small branches are to be cut, the adjustment arrangement **500, 500'** may restrict the range of cutting jaw **C.** Thus the movable blade **104** may be moved over a shorter distance when small branches are to be cut. Further, the drive cable **160** may also have to be pulled for a reduced range for cutting small branches. Thus, ergonomics of the pruning tool **100** is improved.

In the drawings and specification, there have been disclosed preferred embodiments and examples of the invention and, although specific terms are employed, they are used in a generic and descriptive sense only and not for the purpose of limitation of the scope of the invention being set forth in the following claims.

### PRUNING TOOL

### Parts List:

- 100: Pruning Tool
- 102: Cutting Assembly
- 103: Intermediate portion
- 104: Movable Blade
- 105: Cutting Edges of the movable blade
- 106: Stationary blade
- 107: Cutting Edges of the stationary blade
- C: Cutting jaw
- 108: Pivoting arrangement
- 110: Pivot point
- 112: Pivot Pin
- 114: Nut
- 116: Spring
- 118: Spring holder
- 120: Openings on the stationary blade
- 122: Insert
- 124: Distal end
- 126: Handle
- 127: Cap
- 128: Grasping portion of the handle
- 130: First end of the handle
- 132: Second end of the handle
- 134: Safety clasp
- L: Length of the handle
- 136: Channel
- 138: First opening of the channel
- 140: Second opening of the channel
- 142: Wide portion
- W1: Width of wide portion
- W2: Width of the grasping portion
- 144: Recessed portion of the cap
- 146: Openings of the stationary blade
- 148: Openings of the cap
- 150: Openings of the first end of the handle
- 152: Pin
- 154: Holding pin
- XX': Longitudinal axis of the handle
- D: Offset Distance
- 156: Drive cable
- 158: First end of the drive cable
- 160: Second end of the drive cable
- 162: Connect point
- 164: Transmission system
- 166: Pulley arrangement
- 168: First pulley
- 170: Second pulley
- 171: Grooves
- 172: Bolt
- 174: Nut
- 176: Openings
- 178: First pulley opening
- 180: Bolt
- 182: Nut
- 184: Opening in the movable blade
- 186: Second pulley opening
- 188: Hollow part
- 190: Connecting portion
- 200: Pole
- 200A: First tube of the telescopic pole
- 200B: Second tube of the telescopic pole
- 202: Locking mechanism
- 204: Knob
- 206: Coupler
- 300: Pulling member
- 302: Gripping portion
- 304: Elongate portion
- 306: Auxiliary gripping
- 308: Fixation clip
- 310: Uncoil element
- 312: Protruding end of the uncoil element
- 350: First connecting portion
- 351: Second connecting portion
- 352: Cavity
- 400: Coiling arrangement
- 400': Coiling arrangement
- 401: Uncoiling arrangement
- 402: First curved portion
- 404: Second curved portion
- 406: Third curved portion
- 408: First contact surface
- 410: Second contact surface
- 412: Third contact surface
- 414: Fourth contact surface
- 416: First element
- A: Sliding direction of the uncoil element
- 420: First coiling element
- 422: Second coiling element
- 424: Protruding end of the coiling element
- 426: Coupling portion
- 500: Adjustment arrangement
- 500': Adjustment arrangement
- 502: Cam member
- 504: First position of the cam member
- M1: First Maximum width of the cutting jaw
- 506: Dial
- 508: Protruding part of the dial
- 510: Second position of the cam member
- M2: Second Maximum width of the cutting jaw
- M3: Third Maximum width of the cutting jaw
- M4: Fourth Maximum width of the cutting jaw
- 512: Arrestor

## Claims

1. A pruning tool **(100)** comprising:
a cutting assembly **(102)** with a blade arrangement comprising at least one movable component;
a drive cable **(156)** attached to the at least one movable component at a first end of the drive cable **(158),** the drive cable being configured to actuate the at least one movable component;
an intermediate portion **(103)** coupled to the cutting assembly,
a first connecting portion **(350)** formed adjacent to the intermediate portion,
a pulling member **(300)** comprising a drive cable coiling arrangement **(400, 400')** is attached to a second end of the drive cable **(160),** wherein the pulling member comprises a second connecting portion **(351)** configured to be removably coupled to the first connecting portion;
**characterized in that:**
the pulling member (300) comprises a drive cable uncoiling arrangement **(401);**
wherein the uncoiling arrangement (401) includes a spring actuated uncoil element (310) having a protruding end (312) such that:
in a closed position, the uncoil element (310) supports the drive cable (156) with the protruding end (312), and
in an open position, the uncoil element (310) allows to perform uncoiling of the drive cable (156) when the uncoil element (310) is slid in a direction A by overcoming the spring force.

2. The pruning tool according to claim 1, wherein the first connecting portion is a male connector, wherein the second connector of the pulling member is a female connector, the male connector being removably coupled with the female connector.

3. The pruning tool according to claim 1 or 2, wherein the first connecting structure comprises a cavity **(352),** wherein the second connecting portion is an elongate portion **(304),** the cavity configured to at least partly and removably receive the elongate portion of the pulling member.

4. The pruning tool according to any one of the preceding claims, wherein the pulling member comprises a drive cable uncoiling arrangement **(401).**

5. The pruning tool **(100)** according to any one of the preceding claims, further comprising:
a handle **(126)** provided adjacent to the intermediate portion at the end opposite the end the cutting assembly is coupled to, wherein the handle is configured to be grasped by a user during operation of the pruning tool;
a channel **(136)** formed in the handle, wherein a second end of the drive cable **(160)** is received through the channel and is fixed to a pulling member,
whereby the handle has a length in a range of about 10 cm to 30 cm
and whereby the handle further comprises a first connecting portion **(350),** the pulling member comprises a second connecting portion **(351)** configured to be removably coupled to the first connecting portion of the handle.

6. The pruning tool according to any one of the preceding claims, wherein the intermediate portion is integral with the handle.

7. The pruning tool according to any one of the preceding claims, wherein the cutting assembly comprises a stationary blade **(106)** and the at least one movable component, wherein the at least one movable component is a movable blade **(104),** and wherein the movable blade is pivotally connected to the stationary blade with the intermediate portion formed on the stationary blade.

8. The pruning tool according to claim 7, wherein the stationary blade and the movable blade form a cutting jaw **(C)** positioned offset with respect to a longitudinal axis of the handle **(XX').**

9. The pruning tool according to claims 5-8, wherein the handle comprises a grasping portion **(128)** configured to be grasped by a user and a wide portion **(142)** adjacent to the cutting assembly, and wherein a width of the wide portion **(W1)** is larger than a width of the grasping portion **(W2).**

10. The pruning tool according to claims 7- 9, wherein the stationary blade and the movable blade form the cutting jaw, and wherein an adjustment arrangement **(500, 500')** is configured to adjust a maximum width of the cutting jaw.

11. The pruning tool according to claim 5-10, further comprises a pole **(200)** attached to the handle.

12. The pruning tool according to any one of the preceding claims, wherein the pulling member comprises a gripping portion **(302)** having a T-shape.

13. The pruning tool according to any one of the preceding claims, wherein the pulling member comprises a gripping portion **(302)** having a D-shape.

## Patentansprüche

1. Ein Schneidwerkzeug (100), umfassend:
eine Schneidanordnung (102) mit einer Klingenanordnung, die mindestens eine bewegliche Komponente umfasst;
ein Antriebskabel (156), das an der mindestens einen beweglichen Komponente an einem ersten Ende des Antriebskabels (158) befestigt ist, wobei das Antriebskabel so ausgelegt ist, dass es die mindestens eine bewegliche Komponente betätigt;
einen Zwischenabschnitt (103), der mit der Schneidanordnung verbunden ist,
einen ersten Verbindungsabschnitt (350), der neben dem Zwischenabschnitt ausgebildet ist,
ein Zugelement (300), das eine Antriebskabel-Wickelanordnung (400, 400') umfasst, das an einem zweiten Ende des Antriebskabels (160) angebracht ist, wobei das Zugelement einen zweiten Verbindungsabschnitt (351) umfasst, der so ausgelegt ist, dass er lösbar mit dem ersten Verbindungsabschnitt verbunden werden kann;
**dadurch gekennzeichnet, dass**:
das Zugelement (300) eine Antriebskabel-Abwickelanordnung (401) umfasst;
wobei die Abwickelanordnung (401) ein federbetätigtes Abwickelelement (310) mit einem vorstehenden Ende (312) umfasst, so dass:
das Abwickelelement (310) in einer geschlossenen Position das Antriebskabel (156) mit dem vorstehenden Ende (312) trägt, und
das Abwickelelement (310) in einer offenen Position das Abwickeln des Antriebskabels (156) ermöglicht, wenn das Abwickelelement (310) durch Überwindung der Federkraft in eine Richtung A geschoben wird.

2. Schneidwerkzeug nach Anspruch 1, wobei der erste Verbindungsabschnitt ein Stecker ist, wobei der zweite Verbinder des Zugelements eine Buchse ist, wobei der Stecker mit der Buchse lösbar verbunden wird.

3. Schneidwerkzeug nach Anspruch 1 oder 2, wobei die erste Verbindungsstruktur einen Hohlraum (352) umfasst, wobei der zweite Verbindungsabschnitt ein länglicher Abschnitt (304) ist, wobei der Hohlraum so ausgelegt ist, dass er den länglichen Abschnitt des Zugelements zumindest teilweise und entfernbar aufnimmt.

4. Schneidwerkzeug nach einem der vorhergehenden Ansprüche, wobei das Zugelement eine Antriebskabel-Abwickelanordnung (401) umfasst.

5. Schneidwerkzeug (100) nach einem der vorhergehenden Ansprüche, ferner umfassend:
einen Griff (126), der neben dem Zwischenabschnitt an dem Ende vorgesehen ist, das dem Ende gegenüberliegt, mit dem die Schneidanordnung verbunden ist, wobei der Griff so ausgelegt ist, dass er von einem Benutzer während der Betätigung des Schneidwerkzeugs gegriffen werden kann;
einen Kanal (136), der in dem Griff ausgebildet ist, wobei ein zweites Ende des Antriebskabels (160) durch den Kanal aufgenommen und an einem Zugelement befestigt ist,
wobei der Griff eine Länge in einem Bereich von ca. 10 cm bis 30 cm hat
und wobei der Griff ferner einen ersten Verbindungsabschnitt (350) umfasst, das Zugelement einen zweiten Verbindungsabschnitt (351) umfasst, der so ausgebildet ist, dass er lösbar mit dem ersten Verbindungsabschnitt des Griffs gekoppelt werden kann.

6. Schneidewerkzeug nach einem der vorhergehenden Ansprüche, wobei der Zwischenabschnitt einstückig mit dem Griff ist.

7. Schneidwerkzeug nach einem der vorhergehenden Ansprüche, wobei die Schneidanordnung eine stationäre Klinge (106) und die mindestens eine bewegliche Komponente umfasst, wobei die mindestens eine bewegliche Komponente eine bewegliche Klinge (104) ist, und wobei die bewegliche Klinge mit der stationären Klinge mit dem an der stationären Klinge ausgebildeten Zwischenabschnitt schwenkbar verbunden ist.

8. Schneidwerkzeug nach Anspruch 7, wobei die feststehende Klinge und die bewegliche Klinge eine Schneidbacke (C) bilden, die versetzt zu einer Längsachse des Griffes (XX') angeordnet ist.

9. Schneidwerkzeug nach den Ansprüchen 5-8, wobei der Griff einen Greifabschnitt umfasst (128), der so ausgelegt ist, dass er von einem Benutzer gegriffen werden kann, und einen breiten Abschnitt (142), der an die Schneidanordnung angrenzt, und wobei eine Breite des breiten Abschnitts (W1) größer als eine Breite des Greifabschnitts (W2) ist.

10. Schneidwerkzeug nach den Ansprüchen 7- 9, wobei die stationäre Klinge und die bewegliche Klinge die Schneidbacke bilden, und wobei eine Einstellanordnung (500, 500') zur Einstellung einer maximalen Breite der Schneidbacke ausgelegt ist.

11. Schneidwerkzeug nach Anspruch 5-10, ferner umfassend eine am Griff befestigte Stange (200).

12. Schneidwerkzeug nach einem der vorhergehenden Ansprüche, wobei das Zugelement einen Greifabschnitt (302) mit einer T-Form umfasst.

13. Schneidwerkzeug nach einem der vorhergehenden Ansprüche, wobei das Zugelement einen Greifabschnitt (302) mit einer D-Form umfasst.

## Revendications

1. Outil de taille (100) comprenant :
un ensemble de découpe (102) avec une disposition de lame comprenant au moins un composant mobile ;
un câble de commande (156) relié à l'au moins un composant mobile à une première extrémité du câble de commande (158), le câble de commande étant configuré pour actionner l'au moins un composant mobile ;
une partie intermédiaire (103) couplée à l'ensemble de découpe,
une première partie de raccordement (350) formée adjacente à la partie intermédiaire,
un élément de traction (300) comprenant une disposition d'enroulement du câble de commande (400, 400') est relié à une deuxième extrémité du câble de commande (160), dans lequel l'élément de traction comprend une deuxième partie de raccordement (351) configurée pour être couplée de manière amovible à la première partie de raccordement ;
**caractérisé en ce que** :
un élément de traction (300) comprend une disposition de déroulement du câble de commande (401) ;
dans lequel la disposition de déroulement (401) comporte un élément de déroulement actionné par un ressort (310) ayant une extrémité saillante (312) de sorte que:
dans une position fermée, l'élément de déroulement (310) soutienne le câble de commande (156) avec l'aide d'une extrémité saillante (312), et
dans une position ouverte, l'élément de déroulement (310) permette de réaliser le déroulement du câble de commande (156) quand l'élément de déroulement (310) est glissé dans une direction A en surmontant la force du ressort.

2. Outil de taille selon la revendication 1, dans lequel la première partie de raccordement est un connecteur mâle, dans lequel le second connecteur de l'élément de traction est un connecteur femelle, le connecteur mâle étant couplé de manière amovible au connecteur femelle.

3. Outil de taille selon la revendication 1 ou 2, dans lequel la première structure de raccordement comprend une cavité (352), dans laquelle la deuxième partie de raccordement est une partie allongée (304), la cavité configurée pour recevoir au moins partiellement et de façon amovible la partie allongée de l'élément de traction.

4. Outil de taille selon l'une quelconque des revendications précédentes, dans lequel l'élément de traction comprend une disposition de déroulement du câble de commande (401).

5. Outil de taille (100) selon l'une quelconque des revendications précédentes, comprenant en outre :
une poignée (126) fournie adjacente à la partie intermédiaire à l'extrémité opposée de l'extrémité à laquelle l'ensemble de découpe est couplé, dans lequel la poignée est configurée pour être saisie par un utilisateur au cours du fonctionnement de l'outil de taille ;
un canal (136) formé dans la poignée, dans lequel une deuxième extrémité du câble de commande (160) est reçue à travers le canal et est fixée à un élément de traction,
au moyen duquel la poignée a une longueur dans une plage entre environ 10 cm et 30 cm
et au moyen duquel la poignée comprend en outre une première partie de raccordement (350), l'élément de traction comprend une deuxième partie de raccordement (351) configurée pour être couplée de façon amovible à la première partie de raccordement de la poignée.

6. Outil de taille selon l'une quelconque des revendications précédentes, dans lequel la partie intermédiaire est solidaire de la poignée.

7. Outil de taille selon l'une quelconque des revendications précédentes, dans lequel l'ensemble de découpe comprend une lame fixe (106) et l'au moins un composant mobile, dans lequel l'au moins un composante mobile est une lame mobile (104), et dans lequel la lame mobile est reliée de façon pivotante à la lame fixe avec la partie intermédiaire formée sur la lame fixe.

8. Outil de taille selon la revendication 7, dans lequel la lame fixe et la lame mobile forment une mâchoire de découpe (C) positionnée décalée par rapport à un axe longitudinale de la poignée (XX').

9. Outil de taille selon les revendications 5-8, dans lequel la poignée comprend une partie empoignante (128) configurée pour être saisie par un utilisateur et une partie ample (142) adjacente à l'ensemble de découpe, et dans lequel une profondeur de la partie ample (W1) est plus grande qu'une profondeur de la partie empoignante (W2).

10. Outil de taille selon les revendications 7-9, dans lequel la lame fixe et la lame mobile forment la mâchoire de découpe, et dans lequel une disposition de réglage (500, 500') est configurée pour régler une profondeur maximale de la mâchoire de découpe.

11. Outil de taille selon les revendications 5-10, comprend en outre un pôle (200) relié à la poignée.

12. Outil de taille selon l'une quelconque des revendications précédentes, dans lequel l'élément de traction comprend une partie de préhension (302) ayant la forme d'un T.

13. Outil de taille selon l'une quelconque des revendications précédentes, dans lequel l'élément de traction comprend une partie de préhension (302) ayant la forme d'un D.
